# FASCICULE DE BREVET EUROPEEN

(11) **EP 0 453 400 B1**
(45) Date de publication et mention de la délivrance du brevet: **20.07.1994**
(21) Numéro de dépôt: 91810254.2
(22) Date de dépôt: 05.04.1991
(51) Int. Cl.: G09F 9/37

(54) **Dispositif de modulation de lumière à adressage matriciel**
Matrixadressierte Lichtmodulationsvorrichtung
Matrix-addressed light modulation device

(30) Priorité: 20.04.1990 CH 1337/90
(43) Date de publication de la demande: 23.10.1991
(73) Titulaire: CENTRE SUISSE D'ELECTRONIQUE ET DE MICROTECHNIQUE S.A., 2007 Neuchâtel (CH)
(72) Inventeur: Vuilleumier, Raymond, CH-2052 Fontainemelon (CH)
(74) Mandataire: Brulliard, Joel

(56) Documents cités:
- EP-A- 0 085 459
- EP-A- 0 143 079
- GB-A- 2 071 896
- GB-A- 2 101 388
- US-A- 4 725 832
- US-A- 4 740 785

## Description

La présente invention se rapporte aux dispositifs de modulation de lumière comportant des volets orientables électrostatiquement et concerne plus particulièrement de tels dispositifs à adressage matriciel.

Un dispositif de modulation de lumière à microvolets a déjà été décrit dans le brevet suisse No 633 902, délivré le 31 décembre 1982. Ce dispositif, réalisé sur un substrat de silicium, comporte une pluralité de microvolets capables d'être entraînés en rotation sous l'action d'un champ électrique appliqué entre des électrodes situées de part et d'autre des volets. En l'absence de champ électrique, les volets sont maintenus au repos dans le plan du substrat grâce à des attaches élastiques fixées audit substrat. Le dispositif, tel que décrit, ne comporte aucun moyen permettant une commande matricielle des volets; c'est-à-dire la commande des volets, arrangés en matrice, par le biais d'électrodes de ligne et d'électrodes de colonne. Au contraire les volets du dispositif décrit requièrent, chacun, leurs propres électrodes de commande.

Un dispositif de modulation de lumière à adressage matriciel est exposé dans US-A-4725832.

Le brevet suisse No 641 315, délivré le 31 août 1984 sous le titre "Dispositif d'affichage miniature à microvolets", décrit un moyen de réaliser une commande matricielle des microvolets en les associant par paires et en appliquant entre les volets d'une même paire, lorsqu'ils sont adressés, une tension propre à les maintenir dans cet état même lorsque le champ électrique principal de commande disparaît. Pour éviter le "collage" des volets lorsqu'ils sont ainsi maintenus, il est nécessaire de réaliser des structures isolantes sur les volets eux-mêmes ou encore de prévoir des éléments d'arrêt empêchant les volets d'entrer en contact. On conçoit aisément que de tels moyens ne sont pas faciles à mettre en oeuvre et l'on a cherché des solutions qui permettent la commande matricielle des volets sans devoir recourir à des modifications des volets ou de leur environnement.

Ainsi un objet de la présente invention est un dispositif de modulation de lumière à microvolets de type électrostatique qui comporte des moyens permettant une commande matricielle.

Un autre objet de l'invention est un dispositif de modulation de lumière dont les microvolets peuvent être maintenus dans un état actif même en l'absence de la tension de commande d'activation.

Ces objets sont réalisés grâce à un dispositif de modulation de lumière ayant les caractéristiques définies dans les revendications.

Un avantage de l'invention est de permettre l'utilisation d'une commande de type conventionnel.

Un autre avantage de l'invention est que les électrodes de ligne d'une part et l'électrode de maintien d'autre part maintiennent les volets en position de repos ou en position activée, respectivement.

D'autres objets, caractéristiques et avantages de la présente invention apparaîtront plus clairement à la lecture de la description suivante d'un exemple de réalisation particulier, ladite description étant faite à titre purement illustratif et en relation avec les dessins joints dans lesquels:

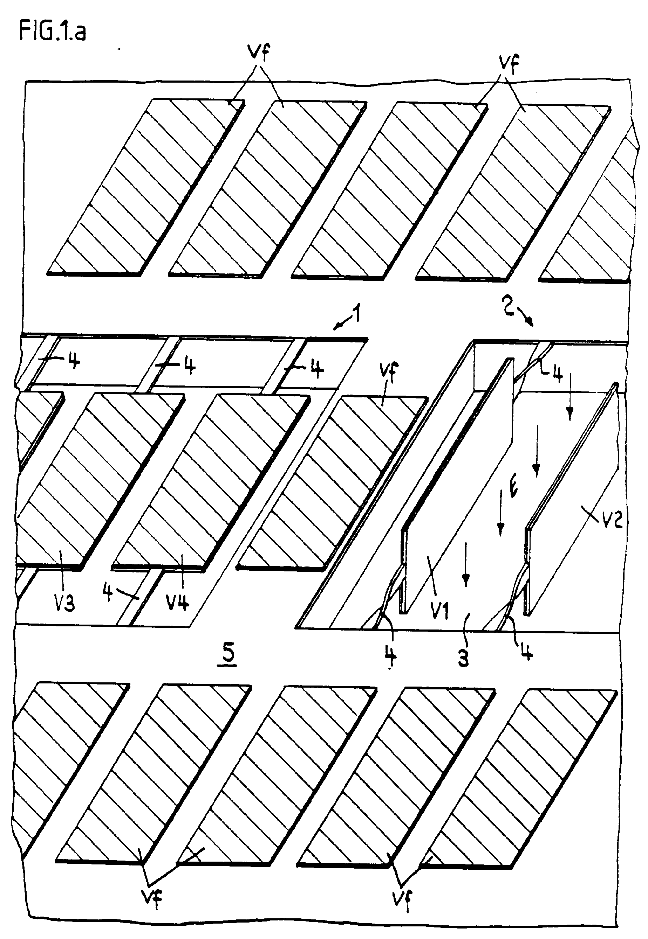

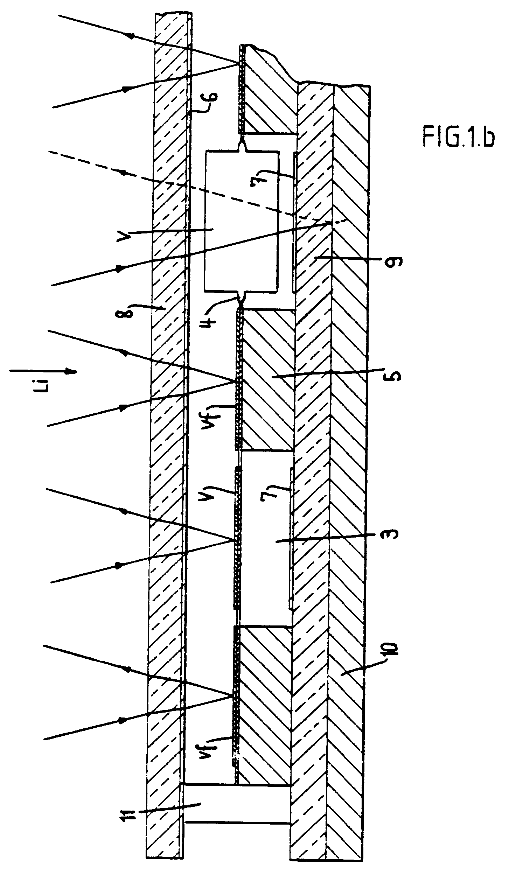

- la figure 1.a montre un schéma d'un dispositif de l'art antérieur;
- la figure 1.b montre une vue en coupe du dispositif de la figure 1.a;
- la figure 2 montre un autre dispositif de l'art antérieur permettant une commande de type matriciel;
- la figure 3 montre un schéma d'un dispositif de modulation de lumière selon l'invention;
- la figure 4 est une vue en coupe d'un élément du dispositif de la figure 3;
- la figure 5 montre le diagramme des signaux de commande du dispositif de la figure 3; et
- la figure 6 montre le dessin des électrodes et des connexions pour un dispositif comportant une matrice de 10 lignes et 16 colonnes.

Les figures 1.a et 1.b représentent le dispositif tel que décrit dans le brevet suisse précité No 633 902. Des volets V1 à V4 sont susceptibles de tourner au-dessus d'une cavité 3, réalisée dans un substrat 5, lorsqu'ils sont soumis à un champ électrique E. Le champ électrique est créé par l'application d'une tension entre une électrode commune 6, placée sur une plaque de verre 8, et l'électrode 7 placée sous le volet. Lorsque la tension entre ces deux électrodes est annulée, le volet qui était adressé revient dans sa position de repos, c'est-à-dire parallèle au plan du substrat, sous l'action des attaches élastiques 4 qui le rattachent au substrat. Il est clair que, dans l'application décrite, la commande des volets ne peut pas être de type matriciel.

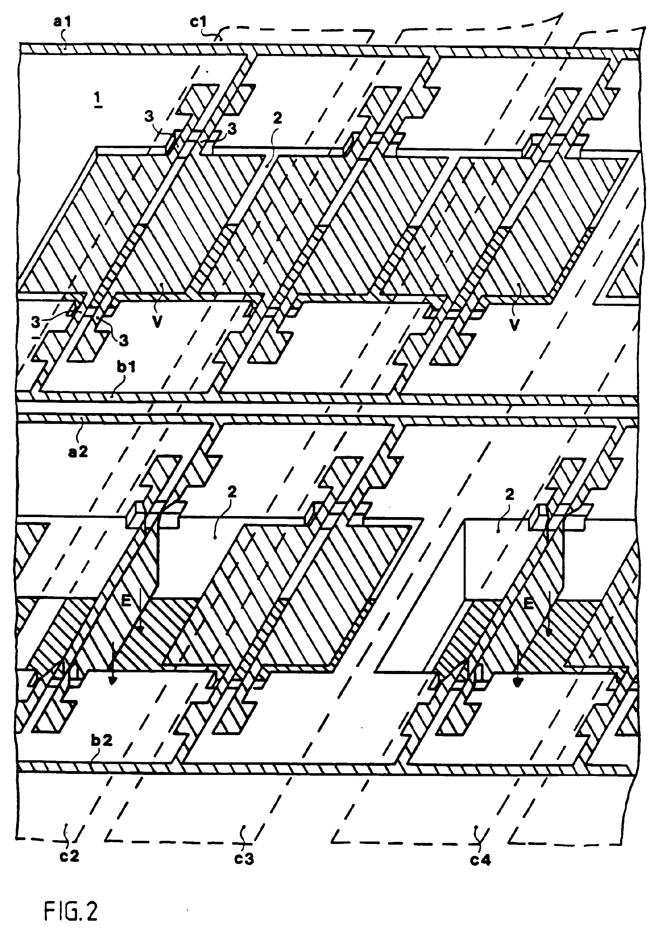

Le dispositif montré à la figure 2, qui fait l'objet du brevet suisse également précité No 641 315 mentionné ci-dessus, est agencé de manière à permettre une commande matricielle des volets. Pour cela les volets V sont arrangés par paires et peuvent être maintenus dans un état actif, c'est-à-dire dans une position orthogonale par rapport au plan du substrat 1, par l'application d'une tension suffisante entre les volets d'une même paire. Dans ce but, les volets comportent au moins une couche conductrice reliée à une électrode de maintien a1, b1, a2 ou b2. Les électrodes c1 à c4 servent, conjointement avec les électrodes ai et bi, à créer le champ électrique d'adressage des volets. Comme indiqué précédemment, il faut éviter que les couches conductrices des volets puissent venir en contact l'une de l'autre lorsque les volets sont activés; ce qui requiert la mise en oeuvre de moyens d'arrêt particuliers décrits dans ledit brevet.

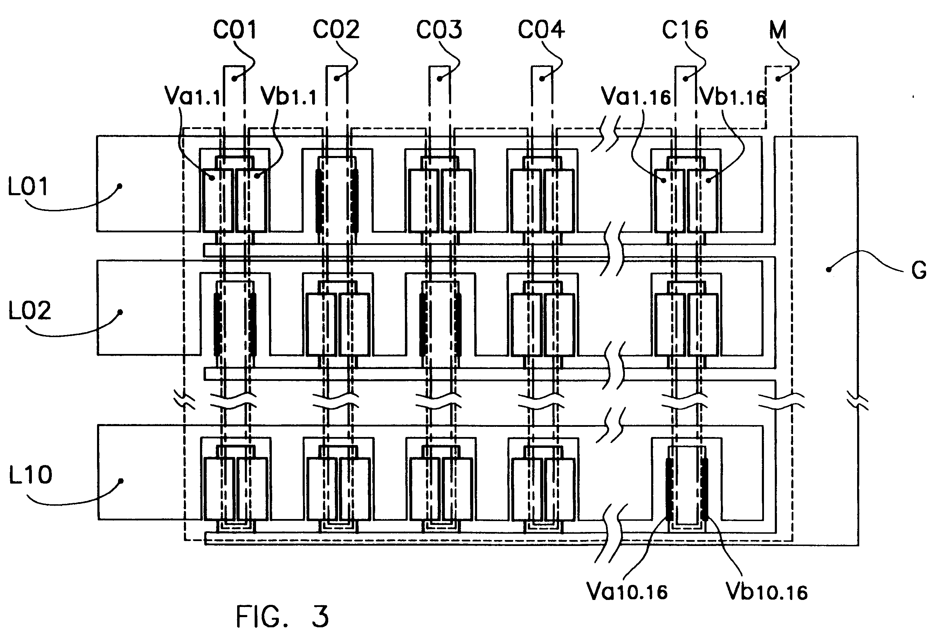

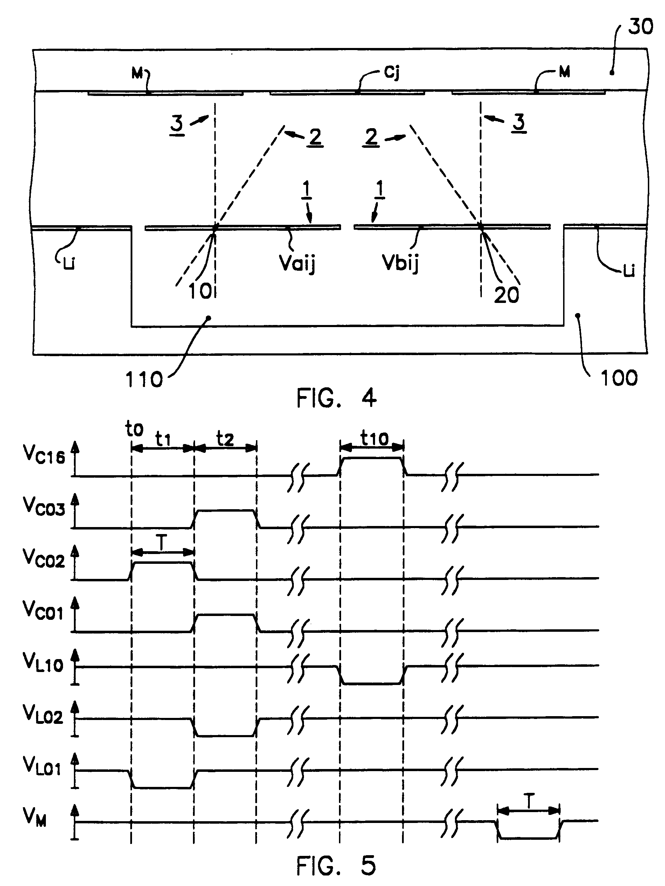

Le dispositif de l'invention se caractérise par un agencement particulier des électrodes qui permet l'obtention de deux positions stables des volets; à savoir la position de repos et la position activée. Cela est rendu possible grâce à une électrode, dite de maintien et commune à tous les volets, qui stabilise les volets, rendus actifs par l'application de tensions appropriées sur les électrodes de ligne et de colonne correspondantes. La position de repos, quant à elle, est assurée par les électrodes de ligne d'une part et par des moyens mécaniques d'autre part. Il devient alors possible de réaliser une commande matricielle puisque les volets présentent deux positions stables indépendantes des tensions d'adressage. La figure 3 montre schématiquement la position des volets ainsi que la disposition des électrodes qui interviennent tant pour l'adressage de ces derniers que pour leur maintien dans l'une et l'autre des positions stables. La figure 4 montre le détail d'une cellule ainsi que les positions respectives des volets dans les différentes phases d'adressage. La matrice représentée à la figure 3 comprend 10 x 16 cellules réparties en 10 lignes (L01 à L10) et 16 colonnes (C01 à C16). Chaque cellule comprend deux volets disposés côte à côte, comme représenté à la figure 4. Les volets Vaij et Vbij (où "i" représente le numéro de la ligne et "j" le numéro de la colonne), de forme rectangulaire, sont fixés à un substrat 100 par des attaches 10, 20, suffisamment élastiques pour permettre la rotation des volets tout en exerçant sur ces derniers une force de rappel vers la position de repos. Une cavité 110 a été ménagée dans le substrat pour assurer le libre mouvement des volets. Les attaches des volets sont légèrement décentrées vers le substrat et la rotation de ces derniers se fait en sens inverse. Séparée du substrat 100 et fixée à ce dernier par des moyens appropriés, une plaque transparente 30, par exemple en verre, porte des électrodes dites de colonne, telle Cj, et une électrode M dite de maintien. Comme on peut le voir sur les figures 3 et 4, les électrodes de colonne sont disposées au-dessus des colonnes de cellules, respectivement, sans les recouvrir complètement tandis que l'électrode de maintien M est commune à toutes les cellules et est disposée, au niveau de chaque cellule, de part et d'autre de l'électrode de colonne. Les volets, eux-mêmes, constituent des électrodes qui sont toutes reliées à une électrode commune G. Enfin, les électrodes de ligne, L01 à L10, sont disposées sur le substrat, chacune de part et d'autre des cellules de la ligne.

Le fonctionnement du dispositif de l'invention va maintenant être expliqué en référence à la figure 5 qui montre une séquence d'adressage pour les cellules de la matrice de la figure 3. Au début de la séquence, c'est-à-dire au temps to, les électrodes de ligne L01 à L10 sont toutes activées, par les tensions V_{L01} à V_{L10} respectivement, et une tension de maintien V_{M} est appliquée à l'électrode M de maintien. Les volets de toutes les cellules sont alors maintenus dans leur position de repos (position 1, figure 4) par le champ électrique créé entre les électrodes de ligne et les volets; l'électrode G étant toujours reliée à la masse. Les lignes L01 à L10 sont ensuite adressées en succession, pendant les temps t1 à t10 respectivement, en ramenant leur tension à zéro (ou à une tension voisine de zéro). Pendant le temps d'adressage d'une ligne, par exemple le temps t2 pour la ligne L02, les électrodes des colonnes correspondant aux cellules à activer, soit les colonnes C01 et C03, reçoivent une tension de commande V_{C01}, respectivement V_{C03}; ce qui entraîne la rotation des volets correspondants jusqu'à la position 2. Lorsque la tension appliquée sur les électrodes de colonne est ramenée à zéro, soit à la fin du temps d'activation des colonnes, les volets passent de la position 2 à la position 3 sous l'effet du champ créé par l'électrode de maintien sur lesdits volets. A la fin de la séquence d'adressage, la tension V_{M} appliquée à l'électrode M de maintien est, soit maintenue si les volets doivent garder les mêmes positions, soit ramenée à zéro pour que tous les volets reviennent à leur position de repos avant une nouvelle séquence d'adressage.

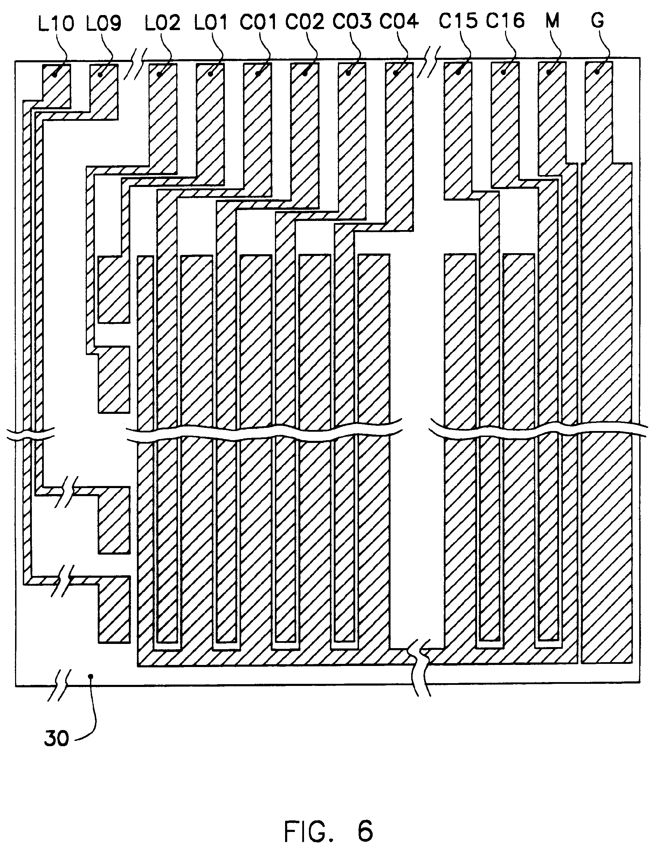

La disposition des volets et des électrodes permet la réalisation d'une commande matricielle, indispensable pour des applications exigeant un grand nombre de cellules. La figure 6 montre un exemple des électrodes de colonne et de maintien réalisées sur une plaque transparente (plaque 30 dans la figure 4), pour la matrice de cellules de la figure 3. Sont également représentées sur cette figure 6 les connexions des électrodes de ligne et de l'électrode de masse (électrode G reliée aux volets). Ces dernières connexions peuvent être reliées aux électrodes correspondantes sur le substrat au moyen d'entretoises conductrices. Bien entendu, les électrodes réalisées sur la plaque transparente doivent elles-mêmes être transparentes, ce qui peut être obtenu avec un oxyde d'étain et d'indium, appelé ITO.

On comprend que les positions et les dimensions des électrodes de colonne et de maintien ainsi que les valeurs des tensions qui leur sont appliquées déterminent les positions prises par les volets lorsqu'ils sont adressés, respectivement maintenus. En fait, les dimensions des différents éléments dépendent de l'application envisagée. A titre d'exemple non limitatif, a été réalisé un dispositif de modulation de lumière comportant une matrice de 10 x 16 cellules, dont les caractéristiques sont les suivantes:
Dimensions de la matrice: 19 mm x 30 mm.
Dimensions des volets: 550 µm x 1 100 µm.
Tension de ligne: 20 volts.
Tension de colonne: 30 volts.
Tension de maintien: 25 volts.
Espace entre le support et la plaque transparente: 400 µm.
Durée d'une impulsion de commande: 25 ms.
Durée d'une séquence d'adressage: 250 ms.

Différents procédés connus peuvent être utilisés pour la préparation du substrat 100 et la réalisation des volets, de leurs attaches et des électrodes. Un procédé basé sur les techniques d'usinage du silicium a été décrit dans les brevets suisses précités. Un autre procédé, basé sur l'utilisation d'une grille de support métallique, a été décrit dans le brevet suisse No 654 686, délivré le 28 février 1986 et intitulé: "Procédé de fabrication d'un dispositif à microvolets". Les techniques utilisées dans les procédés mentionnés ci-dessus sont parfaitement applicables à la réalisation de la présente invention.

Bien que l'invention ait été décrite dans le cadre d'un exemple de réalisation particulier, il est clair qu'elle est susceptible de modifications ou de variantes sans sortir de son cadre. Il est, par exemple, possible d'échanger les positions respectives des électrodes de colonne et de maintien et de réaliser les volets de manière qu'ils tournent en sens inverse de celui décrit à la figure 4. Une autre variante consiste à ne prévoir qu'un seul volet par cellule. Par ailleurs selon l'application envisagée, le fond des cavités sous les volets peut être recouvert d'un matériau absorbant ou réfléchissant la lumière ou encore être transparent; les surfaces externes des volets peuvent être réfléchissantes ou diffusantes.

## Revendications

1. Dispositif de modulation de lumière à adressage matriciel comportant une matrice de cellules, chaque cellule comprenant un ou plusieurs volets (Vaij, Vbij) qui sont fixés à un substrat (100) par des attaches élastiques (10, 20) et sont susceptibles de tourner autour de leurs attaches sous l'action d'un champ électrique, des électrodes de ligne (L01 - L10) réalisées sur ledit substrat et des électrodes de colonne (C01 - C16) portées par une plaque transparente (30) disposée à distance fixe dudit substrat; ledit dispositif étant caractérisé en ce que:
- lesdits volets portent des électrodes qui sont reliées entre elles ainsi qu'à une tension de référence (V_{G});
- lesdites électrodes de ligne, réalisées sur ledit substrat, sont disposées dans l'alignement desdits volets de manière à maintenir ceux-ci en position de repos (1) lorsqu'ils ne sont pas adressés, grâce à l'application d'une différence de tension (V_{Li}) entre les volets et lesdites électrodes de ligne;
- lesdites électrodes de colonne sont disposées au-dessus des volets de telle manière qu'elles puissent, sous l'action d'une tension de commande (V_{Ci}) appliquée auxdites électrodes de colonne, entraîner la rotation des volets lorsqu'ils sont adressés;
- une électrode de maintien (M) commune à tous les volets est prévue sur ladite plaque transparente et reçoit une tension de maintien (V_{M}) propre à maintenir les volets qui ont été adressés en position active (3) lorsque la tension de commande disparait.

2. Dispositif de modulation de lumière selon la revendication 1, caractérisé en ce que lesdites électrodes de ligne sont successivement adressées en amenant leur tension à une valeur sensiblement égale à ladite tension de référence et en ce qu'à chaque période d'adressage d'une ligne, les électrodes de colonne qui correspondent aux volets de la ligne à commander, reçoivent simultanément ladite tension de commande pendant le temps d'adressage de la ligne.

3. Dispositif selon la revendication 1, caractérisé en ce que chaque cellule comprend deux volets et en ce que l'axe de rotation de chaque volet est distinct de son axe de symétrie.

4. Dispositif selon la revendication 3, caractérisé en ce que ladite électrode de maintien est, au niveau de chaque cellule, disposée de part et d'autre de l'électrode de colonne.

## Patentansprüche

1. Lichtmodulationsvorrichtung mit Matrizenadressierung, umfassend eine Matrize aus Zellen, wobei jede Zelle einen oder mehrere Flügel (Vaij, Vbij) umfaßt, die an einem Substrat (100) durch elastische Befestigungen (10, 20) angebracht sind und um ihre Befestigungen unter der Wirkung eines elektrischen Feldes verdrehbar sind, mit Zeilenelektroden (L01 bis L10), realisiert auf dem Substrat, und mit Spaltenelektroden (C01 bis C16), getragen von einer transparenten, im festen Abstand von dem Substrat angeordneten Platte (30), welche Vorrichtung dadurch gekennzeichnet ist, daß
- die Flügel Elektroden tragen, die untereinander sowie mit einer Referenzspannung (V_{G}) verbunden sind;
- die Zeilenelektroden, die auf dem Substrat realisiert sind, sind in Ausfluchtung mit den Flügeln derart angeordnet, daß sie diese in Ruheposition (1) halten, solange sie nicht adressiert sind, dank der Anlegung einer Spannungsdifferenz (V_{Li}) zwischen den Flügeln und den Zeilenelektroden;
- die Spaltenelektroden sind oberhalb der Flügel derart angeordnet, daß sie unter der Wirkung einer Steuerspannung (V_{Ci}), angelegt an die Spaltenelektroden, die Drehung der Flügel bei deren Adressierung antreiben können;
- eine allen Flügeln gemeinsame Halteelektrode (M) ist auf der transparenten Platte vorgesehen und erhält eine Haltespannung (V_{M}), um die Flügel, die in die Aktivposition (3) adressiert worden sind, zu halten, wenn die Steuerspannung entfällt.

2. Lichtmodulationsvorrichtung nach Anspruch 1, dadurch gekennzeichnet, daß die Zeilenelektroden sukzessiv adressiert werden, indem ihre Spannung auf einen Wert im wesentlichen gleich der Referenzspannung gebracht wird, und daß in jeder Adressierperiode einer Zeile die Spaltenelektroden, welche den Flügeln der zu steuernden Zeile entsprechen, gleichzeitig die Steuerspannung während der Adressierzeit der Zeile erhalten.

3. Vorrichtung nach Anspruch 1, dadurch gekennzeichnet, daß jede Zelle zwei Flügel umfaßt und daß die Drehachse jedes Flügels abweicht von seiner Symmetrieachse.

4. Vorrichtung nach Anspruch 3, dadurch gekennzeichnet, daß die Halteelektrode in Höhe jeder Zelle beidseits der Spaltenelektrode angeordnet ist.

## Claims

1. Matrix-addressed light modulation device including a matrix of cells, each cell comprising one or more flaps (Vaij, Vbij) which are fixed to a substrate (100) by resilient attachments (10, 20) and are able to rotate about their attachments under the action of an electrical field, row electrodes (L01 - L10) produced on the said substrate and column electrodes (C01 - C16) carried by a transparent plate (30) disposed at a fixed distance from the said substrate; the said device being characterised in that:
- the said flaps carry electrodes which are connected together and to a reference voltage (V_{G});
- the said row electrodes, produced on the said substrate, are disposed in line with the said flaps so as to keep the latter in the position of rest (1) when they are not addressed, because of the application of a voltage difference (V_{Li}) between the flaps and the said row electrodes;
- the said column electrodes are disposed above the flaps so that they are able, under the action of a control voltage (V_{Ci}) applied to the said column electrodes, to cause the rotation of the flaps when they are addressed;
- a holding electrode (M) common to all the flaps is provided on the said transparent plate and receives a holding voltage (V_{M}) suitable for holding the flaps which have been addressed in the active position (3) when the control voltage disappears.

2. Light modulation device according to Claim 1, characterised in that the said row electrodes are successively addressed by bringing their voltage to a value substantially equal to the said reference voltage and in that, at each period of addressing of a row, the column electrodes which correspond to the flaps in the line to be controlled simultaneously receive the said control voltage during the time during when the line is addressed.

3. Device according to Claim 1, characterised in that each cell comprises two flaps and in that the axis of rotation of each flap is separate from its axis of symmetry.

4. Device according to Claim 3, characterised in that the said holding electrode is, at each cell, disposed on each side of the column electrode.
